Europäisches Patentamt

European Patent Office

Office européen des brevets

(19)

(11) Veröffentlichungsnummer : **0 086 425**
**B2**

(12) **NEUE EUROPÄISCHE PATENTSCHRIFT**

(45) Veröffentlichungstag der neuen Patentschrift :
09.11.88

(51) Int. Cl.⁴ : **B 60 K 15/02**

(21) Anmeldenummer : 83101130.9

(22) Anmeldetag : 07.02.83

(54) **Kraftstoffbehälter mit einem Beruhigungstopf aus thermoplastischem Kunststoff.**

(30) Priorität : 17.02.82 DE 3205592

(43) Veröffentlichungstag der Anmeldung :
24.08.83 Patentblatt 83/34

(45) Bekanntmachung des Hinweises auf die Patenterteilung : 03.07.85 Patentblatt 85/27

(45) Bekanntmachung des Hinweises auf die Entscheidung
über den Einspruch : 09.11.88 Patentblatt 88/45

(84) Benannte Vertragsstaaten :
BE DE FR GB IT NL SE

(56) Entgegenhaltungen :
DE-A- 3 015 189
DE-A- 3 213 070
DE-A- 3 413 399
DE-B- 1 780 682
DE-C- 3 006 254
FR-A- 2 394 472

(73) Patentinhaber : BASF Aktiengesellschaft
Carl-Bosch-Strasse 38
D-6700 Ludwigshafen (DE)

(72) Erfinder : Jung, Norbert
Europa-Ring 18
D-6840 Lampertheim 1 (DE)
Erfinder : Lindner, Edmund
Edenkobener Strasse 9
D-6700 Ludwigshafen (DE)
Erfinder : Lohrbaecher, Volker
Kisslichstrasse 1
D-6940 Weinheim (DE)

EP 0 086 425 B2

## Beschreibung

Die vorliegende Erfindung betrifft einen Kraftstoffbehälter aus thermoplastischem Kunststoff mit einem Beruhigungstopf, der aus zwei aus einander gegenüberliegenden Tankwandungen herausgeformten, wulstartigen Erhebungen gebildet wird, die sich gegenseitig berühren und an den Berührungsstellen miteinander verbunden sind, und ggf. eine Einrichtung zum Behindern des Kraftstoffabflusses besitzt. Ein derartiger Kraftstoffbehälter ist beispielsweise in DE-A-1455496 (Abbildung 3) dargestellt.

Bei Kraftfahrzeugen mit Verbrennungsmotorantrieb, deren Antriebsmaschinen mit Kraftstoffeinspritzung arbeiten, ist es erforderlich, dass während der Kraftstoffentnahme aus dem Kraftstoffbehälter bis zum völligen Aufbrauchen des Behälterinhaltes keine Luft in das Kraftstofffördersystem gelangt.

Bei solchen Fahrzeugen wird daher der Kraftstoff in der Regel aus einer Stelle des Behälters (Tanks) entnommen, an der sich bis zur völligen Entleerung immer Kraftstoff befindet. Es muss sichergestellt sein, dass auch bei Kurvenfahrt oder beim Befahren geneigter Fahrwege, ebenso wie beim Beschleunigen oder Verzögern während einer gewissen Zeit Kraftstoff aus dem Tank entnommen werden kann, selbst wenn sich die übrige im Tank befindliche Kraftstoffmenge an Stellen des Tanks sammelt, die von der Entnahmestelle entfernt sind. Das gilt insbesondere bei nahezu leerem Tank.

Da aus räumlichen Gründen eine diesen Effekt bewirkende, unter dem Behälterniveau liegende sackähnliche Vertiefung des Behälterbodens nur selten anwendbar ist, wurden Vorrichtungen geschaffen, die, im Behälter liegend, ein Sammeln des Kraftstoffrestes an der Entnahmestelle bewirken.

Im allgemeinen handelt es sich hier um topfförmige, vom Behälter eingeschlossene, aber von dem übrigen Volumen des Behälters abgeteilte Teilvolumina, in denen sich der Kraftstoff beispielsweise durch die Schüttelbewegungen des Fahrzeuges oder durch die Saugwirkung des in den Tank zurückgeförderten Überschusses an entnommenem Kraftstoff ansammelt.

Solche Sammeleinrichtungen werden auch Beruhigungstöpfe, Schlingertöpfe oder Kraftstoff-Staubecken genannt.

Diese Einrichtungen lassen sich in einem aus zwei Schalen (Blech oder Kunststoff) gefertigten Tank vor dem Zusammenfügen der beiden Hälften leicht einbringen. Schwieriger wird diese Aufgabe, wenn der Tank aus thermoplastischem Kunststoff im wesentlichen einstückig nach dem Hohlkörperverfahren oder dem Rotationssinterverfahren hergestellt werden soll, weil die an diesen Tanks vorhandenen Öffnungen im allgemeinen nicht gross genug sind, um einen solchen Beruhigungstopf als Einbauteil nachträglich in das Tankinnere zu bringen. Das beim Blasformen ebenfalls mögliche Einbringen des Beruhigungstopfes während der Tankherstellung ist aufwendig und arbeitsintensiv und stellt gewisse Risiken hinsichtlich der Arbeitssicherheit dar.

Beiden Möglichkeiten haftet der Nachteil an, dass der Beruhigungstopf in einem gesonderten Arbeitsvorgang hergestellt und durch einen weiteren Arbeitsgang am Behälter sicher befestigt werden muss.

In einem anderen Herstellverfahren ist es möglich, den Beruhigungstopf aus den Wandungen des Kraftstoffbehälters zu formen. Hier sind die Wandungen des Tanks so ausgebildet, dass sie einen vom übrigen Tankvolumen abgeteilten Sammelraum einschliessen, in dem sich der schwappende Kraftstoff unter der Wirkung benachbarter Tankwände oder besonderer, um den Sammelraum herum angeordneter und beim Formungsvorgang ebenfalls mit erzeugter Leitwände sammelt. Diese Leitwände können spiralförmig oder als konzentrische, offene Ringe oder in einer anderen geeigneten Weise angeordnet sein.

Vorteilhaft an diesen mitangeformten Beruhigungstöpfen ist, dass sie ohne besonderen Mehraufwand gleich bei der Herstellung des Kraftstofftanks mit entstehen ; ihr Nachteil ist, dass sie infolge des sie umschliessenden Fangsystems von Leitwänden einen verhältnismässig grossen Bedarf an Tankbodenfläche erfordern, vor allem bei blasgeformten oder im Doppelstreckziehverfahren aus zwei Schalen hergestellten Tanks, weil dort die sich zwischen den einzelnen Leitwänden und dem Beruhigungstopf einstellende Wanddicke vom Abstand dieser Leitwandbereiche untereinander, von ihrer Höhe und von der ursprünglichen Wanddicke des Vorformlings oder der zu verformenden Platten abhängt.

Ein weiterer Nachteil der bisher bekannten, einstückig am Tank angeformten Beruhigungstöpfe ist, dass sie als Bestandteil des Tankbodens aus diesem herausgeformt an ihrer Oberseite offen sind ; der darin angesammelte Kraftstoff kann bei auf das Fahrzeug wirkenden Beschleunigungen aus dem Beruhigungstopf herausschwappen.

In der DE-OS-1455496 ist ein mit einem Beruhigungstopf versehener Kraftstofftank für Fahrzeuge beschrieben, dessen Beruhigungstopf durch 2 ringförmige Eindrückungen in zwei einander gegenüberliegenden Wandungen gebildet wird, die in etwa der halben Höhe des Tankes miteinander verschweisst sind. Der Innenraum dieses Beruhigungstopfes hat keine schon beim Tank-Herstellprozess entstehende Verbindung mit dem umgebenden Tankvolumen. Diese Verbindung muss vielmehr durch eine zusätzlich anzubringende Verbindungsleitung, beispielsweise eine Schlauchleitung, hergestellt werden. Eine solche Schlauchverbindung stellt ein gewisses Sicherheitsrisiko dar, wenn sie unterhalb des Tankbodens liegt, weil sie beim Überfahren von Unebenheiten abgerissen werden kann und auch sonst die Gefahr von Undichtigkeiten mit sich bringt. Es war Aufgabe der vorliegenden Erfindung, das durch die beschriebene Schlauchverbindung gegebene Sicherheitsrisiko zu beseitigen.

Allen bisher beschriebenen einstückig mit dem Tankkörper geformten Beruhigungstöpfen haftet der weitere Nachteil an, dass sie keine Einrichtung besitzen, die das Ausfliessen von Kraftstoff aus dem Beruhigungstopf behindern. Es sind zwar Beruhigungstöpfe bekannt mit daran befestigten, den Kraftstoffabfluss erschwerenden Rückschlagklappen. Es handelt sich hier aber durchwegs um separat hergestellte Beruhigungstöpfe, deren Einbringen in den vorliegenden Tank mit den bereits weiter oben erwähnten Nachteilen verbunden ist.

Erfindungsgemäss wurde diese Aufgabe dadurch gelöst, dass die Wand des Beruhigungstopfes V-förmige Durchbrüche aufweist, die eine Verbindung zwischen Behältervolumen und Beruhigungstopf herstellen. Vorteilhafte Weiterbildungen des Erfindungsgedankens sind Gegenstand der Unteransprüche.

Ausführungsformen der Erfindung sind in den Fig. 1 bis 9 dargestellt.

Fig. 1 ist der Schnitt durch einen Kraftstofftank und den einstückig damit verbundenen Beruhigungstopf.

Fig. 2 ist eine Teilansicht auf die Seitenwand des Beruhigungstopfes in Pfeilrichtung A (Fig. 1).

Fig. 3 ist ein Teilausschnitt der Draufsicht auf den am Tankboden angeformten unteren Teil des Beruhigungstopfes mit kreisförmiger Grundfläche (Pfeilrichtung B nach Fig. 1).

Fig. 4 ist die Draufsicht auf ein Beruhigungstopf-Unterteil mit beispielsweise rechteckiger Grundfläche und zwei erfindungsgemässen Durchbrüchen (Pfeilrichtung B nach Fig. 1).

Fig. 5 ist die Seitenansicht einer Rückschlagklappe, die an einem biegsamen Ringelement befestigt ist.

Fig. 6 ist die Ansicht der Rückschlagklappe gemäss Fig. 5 in Pfeilrichtung C.

Fig. 7 ist die Seitenansicht einer Rückschlagklappe, die an einem Klemmstück befestigt ist.

Fig. 8 ist die Ansicht der Rückschlagklappe gemäss Fig. 7 in Pfeilrichtung D.

Fig. 9 ist die Draufsicht auf das Klemmstück nach Fig. 7.

Der erfindungsgemässe Beruhigungstopf 1 besteht aus zwei an sich bekannten, jeweils zur Tankinnenseite gerichteten, eine bestimmte Fläche einschliessenden wulstförmigen Erhebungen 8 am Tankboden 3 und 2 an der Tankoberseite 4, die sich gegenseitig berühren oder an ihren Berührungsstellen 5 vollständig oder teilweise miteinander verbunden, z. B. verschweisst sind.

In der Wandung des so gebildeten Beruhigungstopfes befinden sich, vorzugsweise in der unteren wulstförmigen Erhebung 8, ein oder mehrere Durchbrüche 6, die eine Verbindung zwischen dem den Beruhigungstopf umgebenden Behältervolumen und dem Innenraum des Beruhigungstopfes darstellen. Diese Durchbrüche 6 lassen sich besonders gut herstellen, wenn sie die Form eines V haben. Das Verbleiben einer gewissen Kraftstoff-Vorratsmenge im Beruhigungstopf wird begünstigt, wenn zwischen der tiefsten Stelle des Durchbruchs 6 und dem Boden des Beruhigungstopfes bzw. Tanks eine Schwelle 9 mit der Höhe F verbleibt.

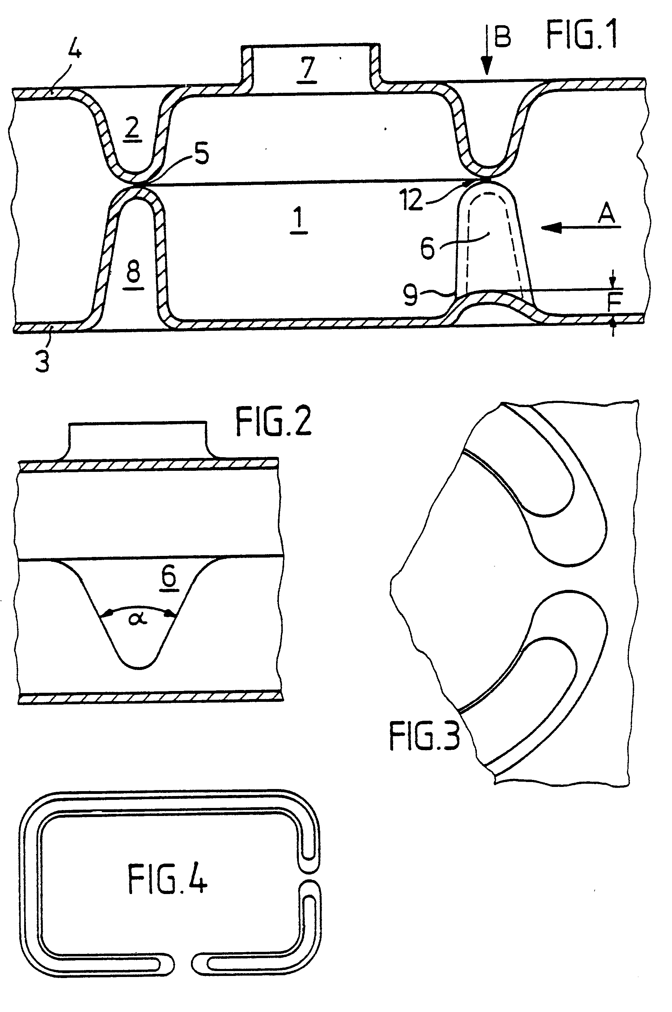

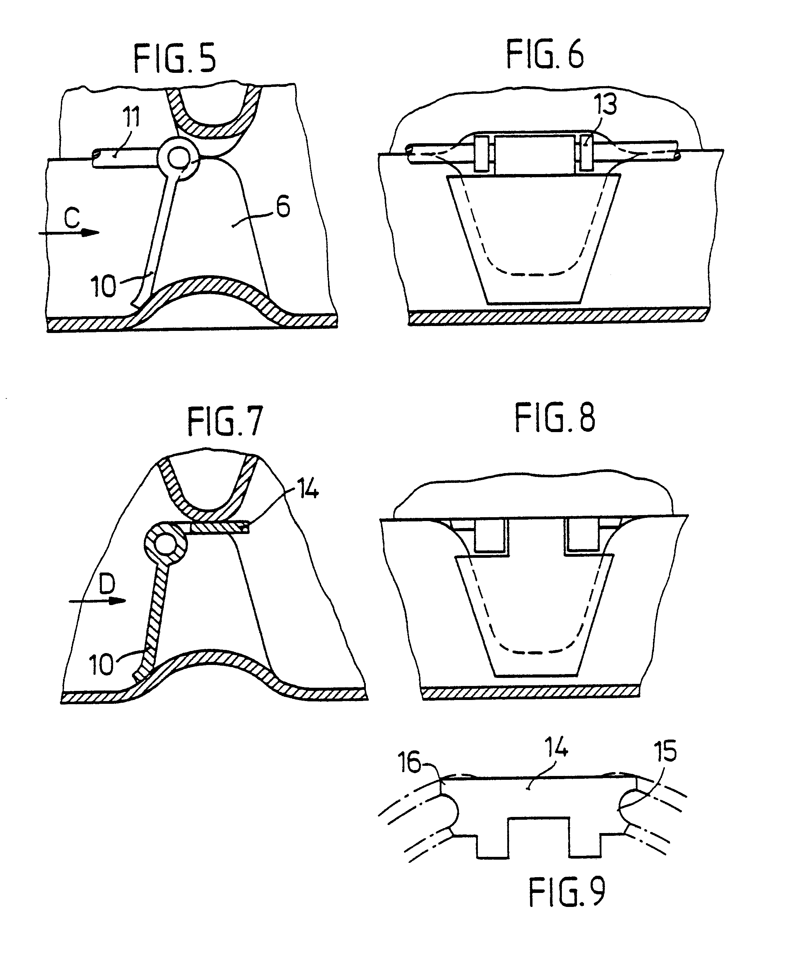

Die Gestalt der vom Beruhigungstopf umschriebenen Bodenfläche richtet sich nach den räumlichen und für die Funktion der Gesamtanlage notwendigen Gegebenheiten. Sie kann kreisrund (Fig. 3) oder beispielsweise auch rechteckig sein (Fig. 4).

Über dem Beruhigungstopf befindet sich eine Öffnung 7, durch die hindurch Einrichtungen zur Kraftstoffentnahme, Kraftstoffrücklauf, Füllstandsanzeige usw. in den Tank eingebracht werden können. Ebenso kann durch die Öffnung 7 eine hier nicht näher beschriebene Einrichtung gesteckt werden, die sich vom Inneren des Beruhigungstopfes 1 hergegen den Durchbruch 6 legt und eine Rückschlagklappe besitzt, die den Abfluss des Kraftstoffs aus dem Beruhigungstopf behindert.

Eine besonders günstige Gestalt des Durchbruchs 6 wird erreicht, wenn er V-förmig gemacht wird, mit einem Öffnungswinkel $\alpha \geqslant 50°$ (Fig. 2), einem Abrundungshalbmesser an der Spitze des V-förmigen Durchbruches $\geqslant 5$ mm und Abrundungshalbmesser am Übergang zum Topfrand $\geqslant 20$ mm (Fig. 2).

Wie bereits erwähnt, hat die Schwelle 9 die Aufgabe, eine gewisse Restmenge Kraftstoff im Topf zurückzuhalten. Bei ungünstigen Beschleunigungskräften oder Neigungen des Tanks ist es jedoch möglich, dass der Kraftstoff aus dem Beruhigungstopf, insbesondere bei fast leerem Tank, über diese Schwelle abfliesst. Zum Verstärken der den Kraftstoffrückhalt im Topf begünstigenden Wirkung der Schwelle 9 dient als weiteres Merkmal der Erfindung eine Rückschlagklappe 10 (Fig. 5). Im Gegensatz zu den an Beruhigungstöpfen bereits bekannten Rückschlagklappen kann die Rückschlagklappe 10 in den erfindungsgemässen Tank auch nachträglich eingebaut werden.

In einer beispielhaften Ausführungsform ist die Rückschlagklappe 10 an einem biegsamen Ringelement 11 beweglich so angebracht, dass sie durch den in den Beruhigungstopf schwappenden Kraftstoffschwall angehoben wird und den Kraftstoff in den Beruhigungstopf eindringen lässt. Drückt aber der im Beruhigungstopf befindliche Kraftstoff gegen die Klappe, so legt sie sich gegen die den Durchbruch 6 umgrenzende Innenwandung und erschwert damit den Rückfluss des Kraftstoffs. Zum Einbau der Rückschlageinrichtung wird das biegsame Ringelement 11 mit der daran befestigten Rückschlagklappe 10 durch die Öffnung 7 in den Beruhigungstopf eingebracht. Der Durchmesser des Ringelements 11 ist so abgestimmt, dass er sich in die an den Berührungsstellen 5 zwischen Beruhigungstopf-Ober- und -Unterteil gebildete Kerbe 12 (Fig. 1) legt und somit die Rückschlagklappe 10 sicher festhält. Am Ringelement 11 angebrachte Nocken 13 (Fig. 6) sichern die Lage des Ringelementes 11 und der Rückschlagklappe 10 gegenüber dem Durchbruch 6. Das Ringelement kann beispielsweise als biegsames Drahtseil, als Schraubenfeder aus Metall oder aus einem biegsamen, kraftstoffbeständigen Kunststoff, beispielsweise Polyethylen, Polypropylen oder Polyformaldehyd bestehen.

Bei einer anderen Ausführung der Rückschlageinrichtung (Fig. 8) ist die Rückschlagklappe 10 an einem Klemmstück 14 beweglich befestigt, das an seinen Enden Kerben 15 aufweist. Durch diese Kerben entstehen 2 Vorsprünge 16. Das Klemmstück 14 besteht aus einem, eine gewisse elastische Verformung zulassenden Material, wie z. B. Polyformaldehyd, Polyethylen oder Polypropylen, so dass es möglich ist, die beiden Vorsprünge 16 so weit abzubiegen, dass sich das Klemmstück vom Inneren des Beruhigungstopfes her durch den Durchbruch 6 hindurchschieben lässt, so dass es an der obersten Stelle des Durchbruchs 6 liegt und mit seinen Kerben 15 dort einrastet.

Das Ringelement 11 bzw. das Klemmstück 14 und die daran befindliche Rückschlagklappe sind so bemessen, dass sie sich durch die Tanköffnung 7 hindurch in den Beruhigungstopf einbringen lassen.

## Patentansprüche

1. Kraftstoffbehälter aus thermoplastischem Kunststoff mit einem Beruhigungstopf, der aus zwei aus einander gegenüberliegenden Tankwandungen (3, 4) herausgeformten, wulstartigen Erhebungen (2, 8) gebildet wird, die sich gegenseitig berühren und an den Berührungsstellen (5) miteinander verbunden sind, und ggf. eine Einrichtung zum Behindern des Kraftstoffabflusses besitzt, dadurch gekennzeichnet, dass die Wand des Beruhigungstopfes V-förmige Durchbrüche (6) aufweist, die eine Verbindung zwischen Behältervolumen und Beruhigungstopf herstellen.

2. Kraftstoffbehälter nach Anspruch 1, dadurch gekennzeichnet, dass der Öffnungswinkel $\alpha$ des V-förmigen Durchbruchs $\geqslant 50°$, der Abrundungshalbmesser an der Spitze des Durchbruchs $\geqslant 5$ mm und die Abrundungshalbmesser am Übergang des Durchbruchs zum Rand des Beruhigungstopfes $\geqslant 20$ mm betragen.

3. Kraftstoffbehälter nach Anspruch 1-2, dadurch gekennzeichnet, dass an der tiefsten Stelle des Durchbruchs (6) eine Schwelle (9) verbleibt.

4. Kraftstoffbehälter nach Anspruch 3, dadurch gekennzeichnet, dass sich im Inneren des Beruhigungstopfes (1) eine Rückschlageinrichtung, bestehend aus einer Rückschlagklappe (10) und einem sie tragenden biegsamen Ringelement (11) befinden.

5. Kraftstoffbehälter nach Anspruch 4, dadurch gekennzeichnet, dass zum Fixieren der Lage der Rückschlagklappe (10) gegenüber dem Durchbruch (6) auf dem Ringelement (11) Nocken (13) angebracht sind.

6. Kraftstoffbehälter nach Anspruch 3-5, dadurch gekennzeichnet, dass die Rückschlagklappe (10) an einem Klemmstück (14) beweglich befestigt ist, das Kerben (15) und Vorsprünge (16) aufweist und in der obersten Stelle des Durchbruchs (6) eingerastet werden kann.

## Claims

1. A fuel tank made of a thermoplastic, having a splash baffle formed by two ridge-like protrusions (2, 8) formed on mutually opposite tank walls (3, 4), which protrusions touch and are joined to one another at the points of contact (5) (and which tank may or may not possess a device for preventing fuel outflow), wherein the wall of the splash baffle has V-shaped perforations (6) which provide a connection between the tank space and the splash baffle.

2. A fuel tank as claimed in claim 1, wherein the aperture angle $\alpha$ of the V-shaped perforation is $\geqslant 50°$, the radius of curvature at the tip of the perforation is $\geqslant 5$ mm, and the radius of curvature at the transition of the perforation to the rim of the splash baffle is $\geqslant 20$ mm.

3. A fuel tank as claimed in claim 1 or 2, wherein a threshold (9) remains at the lowest point of the perforation (6).

4. A fuel tank as claimed in claim 3, wherein a non-return device, consisting of a non-return valve (10) and a flexible ring element (11) carrying the latter, is located inside the splash baffle (1).

5. A fuel tank as claimed in claim 4, wherein studs (13) are provided on the ring element (11) in order to fix the position of the non-return valve (10) relative to the perforation (6).

6. A fuel tank as claimed in claim 3 or 4 or 5, wherein the non-return valve (10) is movably fixed to a clamping member (14) which has notches (15) and projections (16) and can be engaged in the top position of the perforation (6).

## Revendications

1. Réservoir de carburant en matière thermoplastique avec un dispositif de retenue ou de stabilisation, constitué par deux élévations en forme de bosses (2, 8), formées dans deux parois opposées (3, 4) du réservoir, ces élévations se touchant et étant reliées l'une à l'autre aux points de contact (5), et comprenant le cas échéant un moyen pour entraver l'écoulement du carburant, caractérisé en ce que la paroi du dispositif de stabilisation comporte des ouvertures de communication (6) en forme de V entre le volume du réservoir et le dispositif de stabilisation.

2. Réservoir de carburant suivant la revendication 1, caractérisé en ce que l'angle d'ouverture $\alpha$ de l'ouverture en forme de V est égal ou supérieur à 50°, le rayon du sommet arrondi de l'ouverture est égal ou supérieur à 5 mm et le rayon des passages arrondis de l'ouverture au bord du dispositif de stabilisation est égal ou supérieur à 20 mm.

3. Réservoir de carburant suivant les revendications 1 et 2, caractérisé en ce que, dans la partie inférieure de l'ouverture (6), est conservée une partie saillante (9).

4. Réservoir de carburant suivant la revendication 3, caractérisé en ce qu'un dispositif anti-retour, composé d'un clapet anti-retour (10) et d'un élément annulaire élastique (11), portant le clapet, est disposé à l'intérieur du dispositif de stabilisation (1).

5. Réservoir de carburant suivant la revendication 4, caractérisé en ce que l'élément annulaire (11) porte des ergots (13), destinés à régler la position du clapet anti-retour (10) par rapport à l'ouverture (6).

6. Réservoir de carburant suivant les revendications 3 à 5, caractérisé en ce que le clapet anti-retour (10) est monté mobile sur un élément de serrage (14), qui comporte des encoches (15) et des saillies (16) et peut être inséré à force dans la partie supérieure de l'ouverture (6).

FIG.1

FIG.2

FIG.3

FIG.4

FIG.5

FIG.6

FIG.7

FIG.8

FIG.9